# EUROPEAN PATENT SPECIFICATION

(11) **EP 3 458 391 B1**
(45) Date of publication and mention of the grant of the patent: **24.06.2020**
(21) Application number: 17734461.1
(22) Date of filing: 16.05.2017
(51) Int. Cl.: B65G 57/00, B65G 57/03

(54) **MACHINE AND METHOD FOR STACKING CRATES FOR CONTAINING PRODUCTS**
MASCHINE UND VERFAHREN ZUM STAPELN VON KISTEN ZUR AUFNAHME VON PRODUKTEN
MACHINE ET PROCÉDÉ PERMETTANT D'EMPILER DES CAISSES PERMETTANT DE CONTENIR DES PRODUITS

(30) Priority: 17.05.2016 IT UA20163512
(43) Date of publication of application: 27.03.2019
(73) Proprietor: CO.M.A.N. S.r.l., 43010 Fontevivo (PR) (IT)
(72) Inventor: GRASSANI, Bruno, 43015 Noceto (PR) (IT)
(74) Representative: Monelli, Alberto
(86) International application number: PCT/IB2017/052866
(87) International publication number: WO 2017/199161

(56) References cited:
- EP-A1- 0 366 943
- DE-U1- 20 004 435
- JP-A- H11 155 378

## Description

### Technical field

The present invention relates to a machine and a method for stacking crates for containing products. In the technical field, such crates are also called cases. They can have a reticular structure and are open at the top to enable them to be stacked. With stacking, a part of the bottom of the overlying crate is inserted inside the underlying crate.

The machine and the method according to the present invention enable various layers of crates containing products, typically foodstuffs, which have to be shipped, to be stacked on pallets.

### State of the Art

There are known systems enabling the stacking of crates which implement the following steps:
- lifting the column of already stacked crates;
- positioning the crate yet to be stacked below the column of crates;
- resting the column of crates on the crate inserted below.

A drawback of such a modus operandi is tied to the fact that the crates can sometimes be deformed or broken, for example as a result of impacts. In fact, they are normally made of plastic material and are reused several times; moreover, the need to optimise production costs has made them increasingly lightweight.

If the crates are deformed, correct stacking may be precluded. In fact, one side of the underlying crate might not extend in a rectilinear manner, but rather protrude inwards. As a consequence, the underlying crate will prevent the insertion therewithin of the overlying crate. In order to obviate this drawback, the crates fed to the stacking machine are visually inspected by persons who will remove the defective crates if necessary. This solution implies a major cost. Moreover, human error cannot be ruled out, as the operation is highly repetitive.

DE 200 04 435 U1 discloses a machine according to the preamble of claim 1.

### Object of the invention

The object of the present invention is to solve the above-mentioned problems.

In particular, the object of the present invention is to propose a machine and a method for stacking crates for containing products which enable optimal functioning, even when reusing potentially damaged crates.

The stated technical task and the specified objects are substantially reached by a machine and a method for stacking crates for containing products comprising the technical features disclosed in one or more of the appended claims.

The invention is defined by the subject-matter of independent claims 1 and 8.

### Brief description of the drawings

Additional features and advantages of the present invention will become more apparent from the approximate, and hence non-limiting, description of a machine for stacking crates for containing products illustrated in the appended drawings, in which:

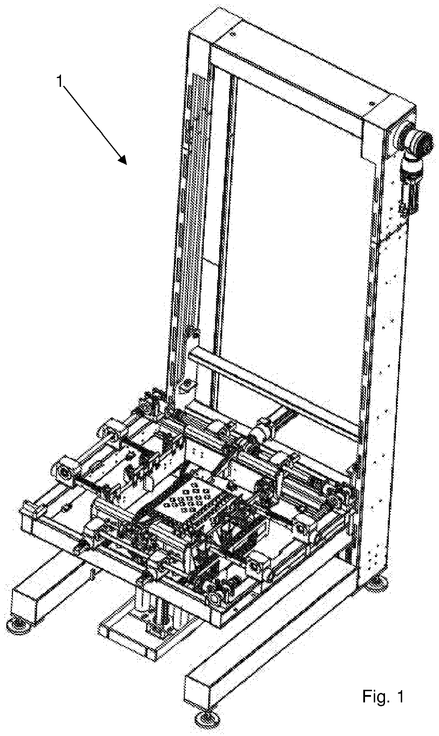

- figure 1 shows a perspective view of a machine according to the present invention;
- figures 2, 3 and 4 show enlargements of figure 1;

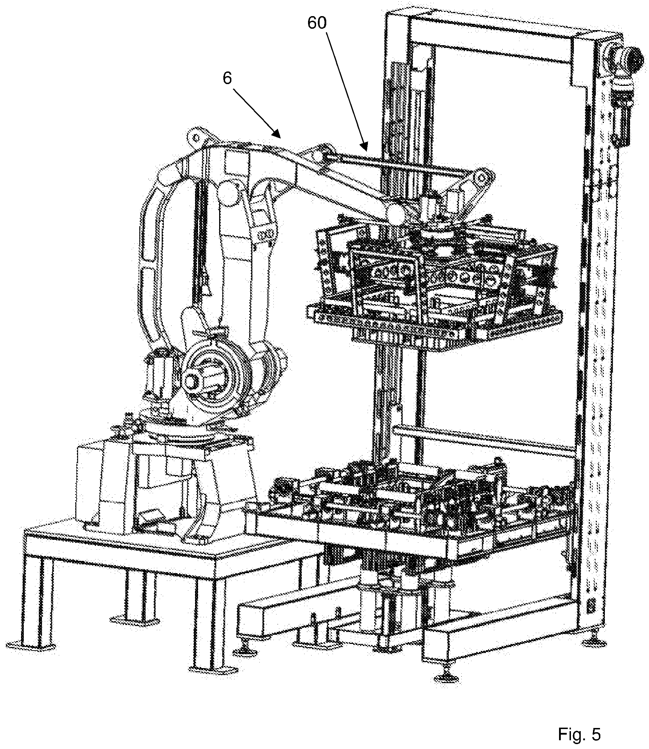

- figure 5 shows a further perspective view of a machine according to the present invention;
- figures 6 and 8 show two views that illustrate two steps of a method according to the present invention;
- figure 7 shows an enlargement of figure 6.

### Detailed description of preferred embodiments of the invention

In the appended figures, the reference number 1 indicates a machine for stacking crates for containing products. The crates are typically crates of equal size that serve as containers for products of various types, above all foodstuffs.

In a preferred embodiment, the crates are loaded on a pallet that facilitates the transport thereof. The machine 1 can comprise a pallet conveyor (for example a belt or roller conveyor). The machine 1 can further comprise a means for stopping the advancement of the pallet along the conveyor. For example, the stopping means can comprise an abutment that intercepts the pallets moving along the conveyor.

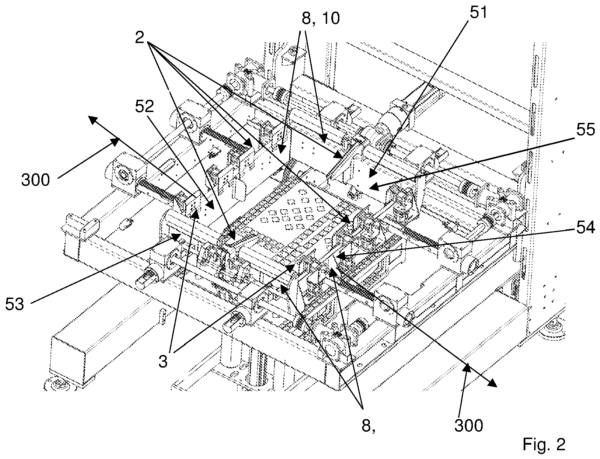

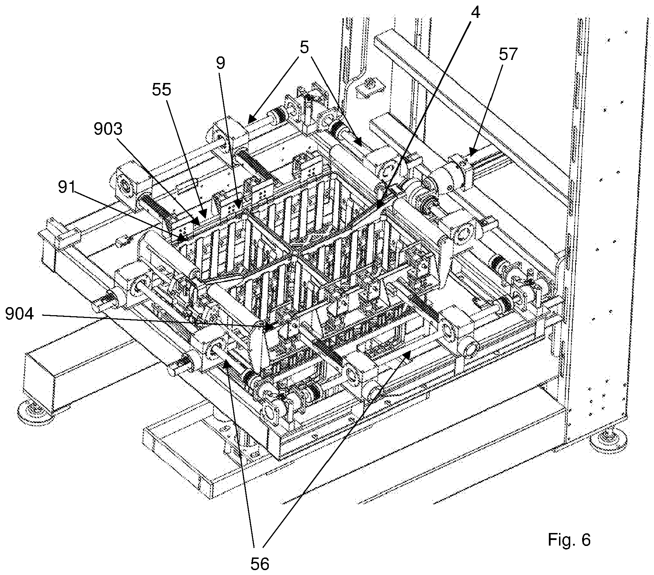

The machine 1 comprises stacking means 6 for stacking the crates in superposed layers. This takes place in a stacking zone 55 (see figure 6). Typically, the stacking means 6 comprise a robot 60 for stacking the crates. The stacking means 6 will initially rest a first layer of crates on the pallet and subsequently proceed to stack the other layers of crates on top of the first pallet. The presence of retaining means 10 for retaining a layer in said stacking zone 55 contributes to this (see, for example, figure 2). The retaining means 10 comprise abutting means 8 which externally delimit the stacking zone 55 at least partly (but preferably they surround it completely).

Conveniently, the machine 1 comprises compensating means 2 for compensating a possible lateral crushing of the crates. This is to avoid the risk that a crate cannot be inserted in the top opening of the underlying crate.

The compensating means 2 comprise traction means 3 for the traction of at least a side of a crate (see for example figure 2).

The abutting means 8 stop a deformation of one or more crates induced by said traction means 3. This avoids outward bulging of the crate which could deform other zones of the crate, thus compromising the possibility of stacking it.

The traction means 3 comprise in particular a means for spreading apart two opposite sides of the perimeter of the first layer of crates by a predetermined distance.

In the course of the present description, the expression "set of crates" shall also include the extreme case in which the set consists of a single crate. In the preferred embodiment, the set of crates consists of four crates. They are arranged according to a 2x2 matrix scheme (2 rows and 2 columns).

The stacking means 6 operate downstream of said compensating means 2 for compensating a possible lateral crushing of the crates. In fact, after having compensated for the deformations, it will be possible to carry out a correct stacking with maximum reliability.

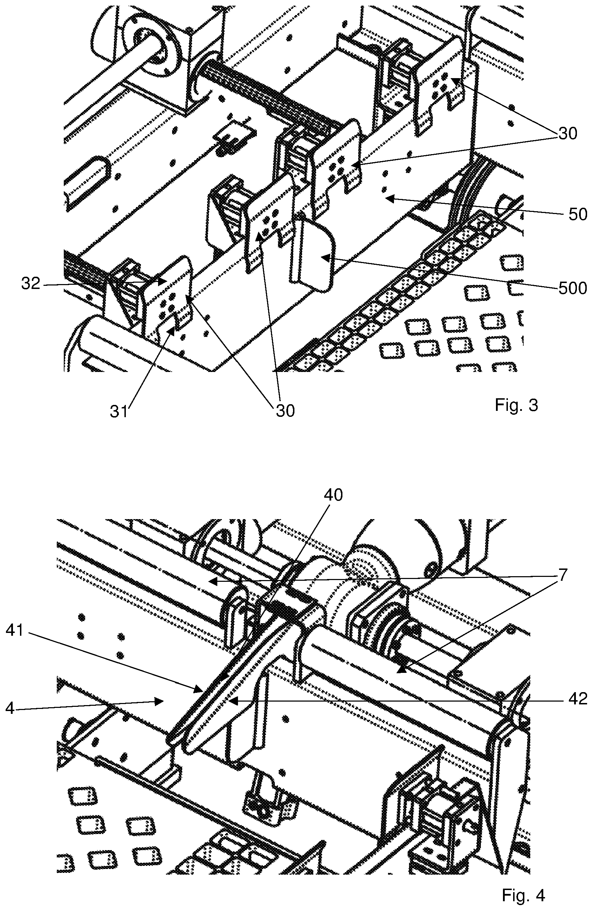

The traction means 3 comprise a plurality of actuators 30, preferably of a fluid-dynamic type. They are advantageously arranged in a first and a second row which are reciprocally parallel. The rows of actuators 30 take hold of edges lying on two opposite sides of the perimeter, as per a plan view, of a layer of crates. If the crates are rectangular, the actuators 30 perform their action on the long side of the perimeter. Advantageously, the actuators 30 comprise a lower portion 31 for gripping the crates (see for example figure 3). The actuators 30 comprise a lead-in edge 32 situated in an upper portion which facilitates the insertion from above of a layer of new crates. The lead-in edge 32 is exemplified by the flare illustrated, for example, in figure 3.

The compensating means 2 comprise reciprocal blocking means 4 for blocking two flanked sides of two adjacent crates (see figure 4). The reciprocal blocking means 4 comprise a first and a second arm 41, 42 which define, interposed between them, a seating 40 for housing a portion of two flanked sides of two adjacent crates. Figure 6 shows the blocking means 4 operatively engaged on the crates.

The reciprocal blocking means 4 are tiltable about a horizontal axis between an operating position in which the first and second arms 41, 42 are reciprocally neared and engage two adjacent crates (like for example in figure 6) and a rest position in which they are reciprocally distanced and disengaged from the crates. The first and the second arm 41, 42, besides tilting about said horizontal axis, can be axially neared and distanced in order to block/disengage the two flanked crates. Conveniently, in the operating position the first and second arms 41, 42 extend substantially horizontally; in the rest position they can extend vertically (not illustrated). During tilting, the first and second arms 41, 42 are able to disengage from the crates and move without being hindered by the walls of the crates.

Conveniently, the abutting means 8 comprise four nearable flanks 51, 52, 53, 54. They come near one another, while remaining reciprocally at a right angle, to surround a stacking zone 55 of the crates. Therefore, the four flanks 51, 52, 53, 54 define a quadrilateral with orthogonal sides. The abutting means 8 are compacting means (if the layer of crates consists of a number of crates). The abutting means 8 are also means for self-centring the crate or the crates in a predetermined unloading zone of the stacking means 6. This enables a correction of the deformations and enables the subsequent reception of the new layer of crates from above.

The machine 1 comprises a single electric motor 57 for activating the nearable flanks. In this regard, the machine 1 comprises four rotating assemblies 56 activated by the electric motor 57 (see figure 6). The four rotating assemblies 56 extend along corresponding sides of a quadrilateral with orthogonal sides. The machine 1 further comprises means for converting the rotational motion of said rotating assemblies into means for the translation of said flanks 51, 52, 53, 54.

Conveniently, gear mechanisms enable the transfer of motion from one of said flanks 51, 52, 53, 54 to another.

At least one of said flanks, but preferably each of said four flanks 51, 52, 53, 54 comprises (see for example figure 3):
- a lateral panel 50;
- an anti-surmounting partition wall 500 which prevents two flanked crates from surmounting one another.

In the operating position of the reciprocal blocking means 4, at least one of the partition walls 500 can be interposed between the first and second reciprocal blocking arms 41, 42.

The partition wall 500 extends from said panel 50 and protrudes towards the inside of the stacking zone 55. The partition wall 500 comprises a vertical plate which is interrupted in a lower portion of said panel 50. This allows the panels 50 also to perform a function of self-centring the pallet intended to support the crates. The partition wall 500 extends at half the length of the panel 50.

In the preferred embodiment, the four flanks 51, 52, 53, 54 comprise:
- a first and a third flank 51, 53, reciprocally opposite;
- a second and a fourth flank 52, 54, reciprocally opposite.

The reciprocal blocking means 4 are positioned at least along the first and third flanks 51, 53. Conveniently, above the first and third flanks 51, 53 there are rollers 7 which facilitate the sliding of the crates that are introduced from above (see for example figure 4). Advantageously, the rollers 7 can rotate, preferably idly, about corresponding horizontal axes.

The traction means 3 are positioned along the second and fourth flanks 52, 54 (see figure 2).

The present invention also relates to a method for stacking crates containing products. Conveniently, said method is implemented by a machine 1 having one or more of the previously described features.

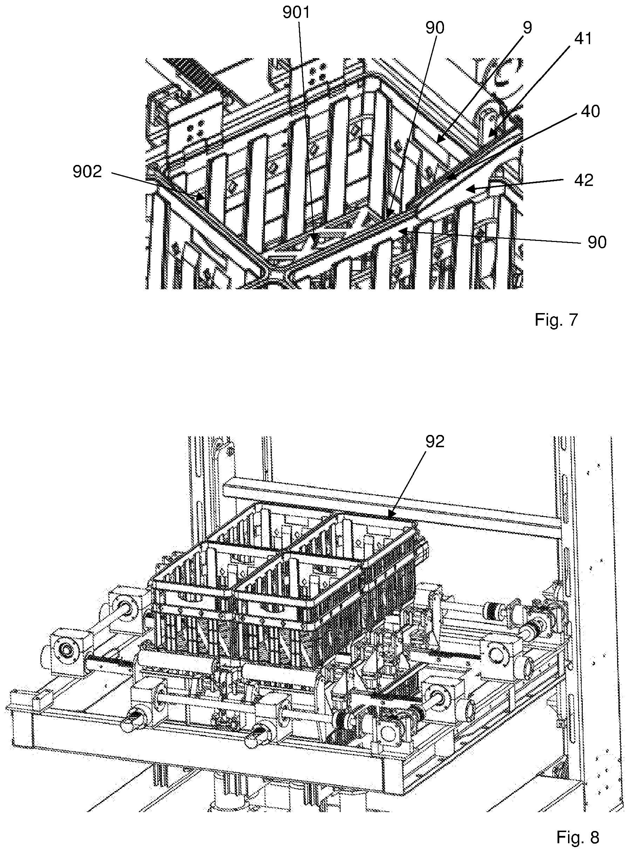

The method comprises the following steps:
- defining a first layer 91 with a first set of crates 9 (see figure 6);
- positioning the lateral abutting means 8 of the first layer 91 in such a way that they self-centre and retain the first layer in a stacking zone 55 (in figure 6 the abutting means 8 are partly hidden by the crates and are better visible in figure 2, where the crates have been omitted);
- stacking a second set of crates 9 on the first set of crates so as to form a second layer 92 (see figure 8).

Typically the first set of crates 9 comprises a plurality of crates 9, preferably four, but it could also comprise even only one. A similar thing may be repeated for the second set of crates.

The crates 9 comprise a structure that is advantageously reticular. Advantageously, it is defined by the combination of longitudinal strips that intersect one another.

The method comprises the steps of compensating for any deformations of the crates 9 in the first set. This takes place before the step of stacking a second set of crates on top of it. Since the crates 9 are open at the top, the step of stacking the crates 9 comprises introducing the bottom 901 of the second set of crates 9 inside the top opening 902 of the crates 9 of the first set.

The step of compensating for any deformations of the crates 9 of the first set comprises the sub-step of pulling at least a side (the upper part of a lateral wall) of a crate of the first set until it is abutted and stopped by the abutting means 8.

In the preferred embodiment, the step of compensating for any deformations of the crates of the first set comprises the sub-step of pulling two opposite sides 903, 904 of the overall perimeter, as defined in a plan view by the first set of crates 9, along opposite directions. In the case of rectangular crates 9, this envisages that the longer sides of the crates 9 are pulled transversely to their main direction of extension (with reference to figure 2, see the arrows indicated by the reference number 300). In particular, the step of pulling the two opposite sides 903, 904 of the perimeter of the first set of crates 9 comprises taking hold of the two opposite sides 903, 904 and spreading them apart. This involves straightening the two opposite sides 903, 904, constraining them between:
- the lateral abutting means 8 (which, in the preferred embodiment, is a quadrilateral enclosure), which prevents bulging towards the outside of the crates 9 of the first set; and
- actuators 30 (gripping means) which pull the two opposite sides 903, 904 towards the quadrilateral enclosure.

The actuators 30 are activated fluid-dynamically. Advantageously, they are supported by the quadrilateral enclosure, and comprise a fluid-dynamically activated element that is movable relative to the quadrilateral enclosure. The fluid-dynamically activated element can:
- be raised and lowered relative to the quadrilateral enclosure in order to be partly introduced into one of the crates 9 of the first set;
- move nearer to and away from the quadrilateral enclosure in order to block or release the crate 9.

Conveniently, the step of stacking the second set of crates 9 on the first set of crates 9 comprises partly introducing a bottom 901 of the second set of crates 9 into the upper opening 902 of the first set of crates 9 (see figure 7). This is facilitated by the presence of rollers 7 rotatable about a substantially horizontal rotation axis and positioned above the quadrilateral enclosure (shown in figure 4). Furthermore, it is facilitated by the presence of an inclined lead-in edge 32 formed in the upper part of the actuators 30 (see figure 3).

The step of compensating for any deformations of the crates 9 also comprises the sub-step of reciprocally retaining at least a portion of two adjacent sides 905, 906 of two flanked crates 9 of the first set. In particular, this is achieved by inserting said portion of the adjacent sides 905, 906 in a seating 40 interposed between a flanked first 41 and a second arm 42. The first and second arms 41, 42 are parallel plates.

After the step of stacking a second set of crates 9 on the first set of crates 9 (figure 8), the method comprises tilting the first and second arms 41, 42 upward, thus disengaging said portion of the adjacent sides 905, 906, and extracting the first and second arms 41, 42 from the crates of the first and second sets. The step of tilting the first and second arms 41, 42 upward comprises rotating the first and second arms 41, 42 about a horizontal axis. During this rotation, the first and second arms 41, 42 move inside slots interposed between frameworks defining the crates 9 of the first and second sets.

The step of positioning the first set of crates defining the first layer 91 comprises the step of placing the first layer 91 on a pallet. Before the step of compensating for any deformations, the method comprises the step of positioning the pallet in a predetermined position and compacting the first set of crates 9 placed on the pallet. The steps of positioning the pallet and compacting the first set of crates 9 comprise the steps of nearing, while keeping them at a right angle, four flanks 51, 52, 53, 54, in such a way as to block said first set of crates 9 between them.

Furthermore, the step of compacting the first set of crates 9 also brings about the centring of the pallet relative to a predetermined zone 55 in which the positioning of the first set of crates is provided for. In this zone, it is also envisaged that stacking means 6 will position the second layer 92 of crates from above. It is thus important that there be a precise positioning of the pallet and of the first set of crates 9 relative to a zone in which the positioning means will release the second layer 92 of crates 9.

After the step of stacking a second set of crates 9 on the first set 91 of crates so as to form a second layer 92, the method comprises the step of raising a platform comprising said quadrilateral enclosure and said gripping means 30 so as to straighten any deformations of the second layer 92 of crates in order to prepare them to receive the partial introduction of a third layer of crates positioned above. By proceeding iteratively in the above-described manner, it is possible to stack further layers of crates on top of the third layer. Care will always be taken to compact the set of crates that is about to receive the new layer of crates, and if necessary to spread apart any deformed edges of the crate that protrude towards the inside of the crate.

With reference to the embodiment of the appended figures, the machine and method according to the invention, in the preferred embodiment, comprise:
- advancing a pallet to the stacking zone 55;
- positioning a first layer of crates on top of the pallet by means of the robot;
- compacting the crates (four in the specific case) by compressing them between four flanks 51, 52, 53, 54 that are reciprocally neared, at a right angle, up to a predetermined distance that takes account of the undeformed dimensions of the crates and the presence of the partition walls 500 (figure 6);
- spreading apart the opposite sides of the layer of crates until bringing them into contact with two opposing flanks used to compact the crates (via the traction means 3);
- retaining the flanked sides of two adjacent crates via the blocking means 4;
- positioning, via the robot, an additional layer on top of the underlying layer (figure 8).

The invention thus conceived makes it possible to achieve multiple advantages.

First of all, it enables crates for containing products to be stacked with the maximum speed and reliability, also in the event that use is made of crates already employed previously. Reused crates can in fact exhibit deformations which under standard conditions would be an obstacle to the introduction of a layer of crates into an underlying layer of crates.

The present invention further makes it possible to assure the correct insertion of crates since it enables the deformations of the crates to be correctly compensated for by pulling the deformed flanks of the crates until they are brought into contact with a predetermined enclosure defined by the abutting means 8 (which thus enable the crates to be repositioned in an initial undeformed configuration).

## Claims

1. A machine for stacking crates for containing products, comprising:
- stacking means for stacking crates in superposed layers in a stacking zone (55);
- retaining means (10) for retaining a layer of one or more crates in said stacking zone (55);
said retaining means (10) comprising abutting means (8) which externally delimit, at least partly, said stacking zone (55);
**characterised in that** it comprises compensating means (2) for compensating for any lateral crushing of the crates, said compensating means (2) comprising traction means (3) for the traction of at least a side of a crate;
and wherein the abutting means (8) stop a deformation of one or more crates induced by said traction means (3); said stacking means operating downstream of said compensating means (2) for compensating for any lateral crushing.

2. The machine according to claim 1, **characterised in that** the compensating means (2) comprises reciprocal blocking means (4) for blocking two flanked sides of two adjacent crates; said reciprocal blocking means (4) comprising a first and a second arm (41, 42) which define, interposed between them, a housing seating (40) of a portion of two flanked sides of two adjacent crates.

3. The machine according to claim 2, **characterised in that** the reciprocal blocking means (4) are tiltable about a horizontal axis between an operating position in which they are destined to engage two adjacent crates and a rest position in which they are disengaged from the crates.

4. The machine according to any one of the preceding claims, **characterised in that** the abutting means (8) comprise four flanks (51, 52, 53, 54) reciprocally nearable at a right angle so as to define the stacking zone (55) of the crates; said abutting means (8) being compacting and auto-centring means of the crates.

5. The machine according to claim 4, when it depends directly or indirectly on claim 2, **characterised in that** each of said four flanks (51, 52, 53, 54) comprises:
- a lateral panel (50);
- an anti-surmounting partition wall (500) which prevents two flanked crates from surmounting one another; said partition wall (500) extending from said panel (50) and protruding towards the interior of the stacking zone (55); said partition wall (500) being interposed between the first and the second arm (41, 42) of the reciprocal blocking means (4) in said operating position of the reciprocal blocking means (4).

6. The machine according to claim 4 or 5, when it depends directly or indirectly on claim 2, **characterised in that** said four flanks (51, 52, 53, 54) comprise:
- a first and a third flank (51, 53), reciprocally opposite;
- a second and a fourth flank (52, 54), reciprocally opposite;
the reciprocal blocking means (4) being positioned at least along the first and third flank (51, 53);
the traction means (3) being positioned along the second and fourth flank (52, 54);

7. The machine according to any one of claims from 4 to 6, **characterised in that** it comprises a single electric motor (57) for activating the four nearable flanks (51, 52, 53, 54).

8. A method for stacking crates containing products, comprising following steps:
- defining a first layer (91) with a first set of crates (9);
- positioning lateral abutting means (8) of the first layer (91) such that they auto-centre and retain the first layer (91) in a stacking zone (55);
- stacking a second set of crates (9) on the first set of crates (9) so as to form a second layer (92);
**characterised by** the compensation for any lateral crushing deformations of the crates (9) of the first set; the step of compensating for any lateral crushing deformations of the crates (9) of the first set comprising the sub-step of pulling at least a side of a crate of the first set against said abutting means (8); the step of compensating for any deformations taking place before the step of stacking a second set of crates on the first set of crates.

9. The method according to claim 8, **characterised in that** the step of compensating for any deformation of the crates (9) of the first set comprises sub-steps of:
- pulling two opposite sides of the overall perimeter defined in plan view by the first layer (91) of crates (9) along opposite directions;
- reciprocally retaining at least a portion of two adjacent sides of two flanked crates (9) of the first set, inserting said portion in a seating (40) defined by a flanked first and a second arm (41,42).

10. The method according to claim 8 or 9, **characterised in that** the step of positioning lateral abutting means (8) of the first layer so that they retain the first layer (91) in a stacking zone (55) comprises a sub-step of nearing, while keeping them at a right angle, four flanks (51, 52, 53, 54) so as to auto-centre and block said first set of crates (9) to them.

## Patentansprüche

1. Maschine zum Stapeln von Kisten zur Aufnahme von Produkten, umfassend:
- Stapelmittel zum Stapeln von Kisten in übereinanderliegenden Schichten in einer Stapelzone (55);
- Haltemittel (10) zum Halten einer Schicht aus einer oder mehreren Kisten in der Stapelzone (55);
wobei die Haltemittel (10) Stoßmittel (8) umfassen, die die Stapelzone (55), mindestens teilweise, außen abgrenzen;
**dadurch gekennzeichnet, dass** sie Kompensationsmittel (2) zum Kompensieren von etwaigem seitlichem Quetschen der Kisten umfasst, wobei die Kompensationsmittel (2) Traktionsmittel (3) zur Traktion von mindestens einer Seite einer Kiste umfassen;
und wobei die Stoßmittel (8)
eine Verformung einer oder mehrerer Kisten stoppen, die durch die Traktionsmittel (3) induziert wird; wobei die Stapelmittel stromabwärts der Kompensationsmittel (2) arbeiten, um etwaiges seitliches Quetschen zu kompensieren.

2. Maschine nach Anspruch 1, **dadurch gekennzeichnet, dass** die Kompensationsmittel (2) wechselseitige Blockiermittel (4) zum Blockieren von zwei flankierten Seiten zweier benachbarter Kisten umfassen; wobei die wechselseitigen Blockiermittel (4) einen ersten und einen zweiten Arm (41, 42) umfassen, die einen dazwischen liegenden Gehäusesitz (40) eines Abschnitts von zwei flankierten Seiten zweier benachbarter Kisten definieren.

3. Maschine nach Anspruch 2, **dadurch gekennzeichnet, dass** die wechselseitigen Blockiermittel (4) um eine horizontale Achse zwischen einer Betriebsposition, in der sie ausgestaltet sind, um zwei benachbarte Kisten in Eingriff zu bringen, und einer Ruheposition, in der sie von den Kisten gelöst sind, kippbar sind.

4. Maschine nach einem der vorhergehenden Ansprüche, **dadurch gekennzeichnet, dass** die Stoßmittel (8) vier Flanken (51, 52, 53, 54) umfassen, die in einem rechten Winkel wechselseitig einander genähert werden können, um die Stapelzone (55) der Kisten zu definieren; wobei die Stoßmittel (8) Verdichtungs- und Selbstzentriermittel der Kisten sind.

5. Maschine nach Anspruch 4, wenn sie direkt oder indirekt von Anspruch 2 abhängt, **dadurch gekennzeichnet, dass** eine jede der vier Flanken (51, 52, 53, 54) umfasst:
- eine Seitenplatte (50);
- eine Trennwand gegen Überlappung (500), die verhindert, dass zwei flankierte Kisten einander überlappen; wobei die Trennwand (500) sich von der Platte (50) erstreckt und zum Inneren der Stapelzone (55) vorsteht; wobei die Trennwand (500) zwischen dem ersten und dem zweiten Arm (41, 42) der wechselseitigen Blockiermittel (4) in der Betriebsposition der wechselseitigen Blockiermittel (4) angeordnet ist.

6. Maschine nach Anspruch 4 oder 5, wenn sie direkt oder indirekt von Anspruch 2 abhängt, **dadurch gekennzeichnet, dass** die vier Flanken (51, 52, 53, 54) umfassen:
- eine erste und eine dritte Flanke (51, 53), die sich gegenüberliegen;
- eine zweite und eine vierte Flanke (52, 54), die sich gegenüberliegen;
wobei die wechselseitigen Blockiermittel (4) mindestens entlang der ersten und dritten Flanke (51, 53) positioniert sind;
wobei die Zugmittel (3) entlang der zweiten und vierten Flanke (52, 54) positioniert sind.

7. Maschine nach einem der Ansprüche 4 bis 6, **dadurch gekennzeichnet, dass** sie einen einzelnen Elektromotor (57) zum Aktivieren der vier Flanken (51, 52, 53, 54), die einander genähert werden können, umfasst.

8. Verfahren zum Stapeln von Kisten, die Produkte aufnehmen, umfassend folgende Schritte:
- Definieren einer ersten Schicht (91) mit einem ersten Satz von Kisten (9);
- Positionieren der seitlichen Stoßmittel (8) der ersten Schicht (91), sodass sie die erste Schicht (91) in einer Stapelzone (55) selbst zentrieren und halten;
- Stapeln eines zweiten Satzes von Kisten (9) auf den ersten Satz von Kisten (9), um eine zweite Schicht (92) zu bilden;
**gekennzeichnet durch** die Kompensation etwaiger seitlicher Quetschverformungen der Kisten (9) des ersten Satzes; wobei der Schritt zum Kompensieren etwaiger seitlicher Quetschverformungen der Kisten (9) des ersten Satzes den Teilschritt zum Ziehen mindestens einer Seite einer Kiste des ersten Satzes gegen die Stoßmittel (8) umfasst; wobei der Schritt zum Kompensieren etwaiger Verformungen vor dem Schritt zum Stapeln eines zweiten Satzes von Kisten auf dem ersten Satz von Kisten stattfindet.

9. Verfahren nach Anspruch 8, **dadurch gekennzeichnet, dass** der Schritt zum Kompensieren etwaiger Verformung der Kisten (9) des ersten Satzes Teilschritte umfasst zum:
- Ziehen von zwei entgegengesetzten Seiten des Gesamtumfangs, der in der Draufsicht durch die erste Schicht (91) der Kisten (9) entlang entgegengesetzter Richtungen definiert ist;
- wechselseitiges Halten von mindestens einem Abschnitt zweier benachbarten Seiten von zwei flankierten Kisten (9) des ersten Satzes, Einführen des Abschnitts in einen Sitz (40), der durch einen flankierten ersten und einen zweiten Arm (41,42) definiert ist.

10. Verfahren nach Anspruch 8 oder 9, **dadurch gekennzeichnet, dass** der Schritt zum Positionieren von seitlichen Stoßmitteln (8) der ersten Schicht, so dass sie die erste Schicht (91) in einer Stapelzone (55) halten, einen Teilschritt zum Annähern von vier Flanken (51, 52, 53, 54) umfasst, während sie im rechten Winkel behalten werden, um den ersten Satz von Kisten (9) selbst zu zentrieren und mit ihnen zu blockieren.

## Revendications

1. Machine permettant d'empiler des caisses permettant de contenir des produits, comprenant :
- des moyens d'empilage pour empiler des caisses en couches superposées dans une zone d'empilage (55) ;
- des moyens de retenue (10) servant à retenir une couche d'une ou plusieurs caisses dans ladite zone d'empilage (55) ;
lesdits moyens de retenue (10) comprenant des moyens de butée (8) délimitant extérieurement, au moins partiellement, ladite zone d'empilage (55);
**caractérisée en ce qu'**elle comprend des moyens de compensation (2) servant à compenser tout écrasement latéral des caisses, lesdits moyens de compensation (2) comprenant des moyens de traction (3) servant à la traction d'au moins un côté d'une caisse ;
et dans laquelle les moyens de butée (8)
arrêtent une déformation d'une ou plusieurs caisses induite par lesdits moyens de traction (3) ; lesdits moyens d'empilage fonctionnant en aval desdits moyens de compensation (2) pour compenser tout écrasement latéral.

2. Machine selon la revendication 1, **caractérisée en ce que** les moyens de compensation (2) comprennent des moyens de blocage (4) réciproque servant à bloquer deux côtés flanqués de deux caisses adjacentes ; lesdits moyens de blocage (4) réciproque comprenant un premier et un second bras (41, 42) définissant, interposé entre eux, un siège de logement (40) d'une partie de deux côtés flanqués de deux caisses adjacentes.

3. Machine selon la revendication 2, **caractérisée en ce que** les moyens de blocage (4) réciproque peuvent s'incliner autour d'un axe horizontal entre une position de fonctionnement, dans laquelle ils sont destinés à mettre en prise deux caisses adjacentes, et une position de repos dans laquelle ils sont désengagés des caisses.

4. Machine selon l'une quelconque des revendications précédentes, **caractérisée en ce que** les moyens de butée (8) comprennent quatre flancs (51, 52, 53, 54) pouvant être rapprochés réciproquement à angle droit de manière à définir la zone d'empilage (55) des caisses ; lesdits moyens de butée (8) étant des moyens de compactage et d'auto-centrage des caisses.

5. Machine selon la revendication 4, lorsqu'elle dépend directement ou indirectement de la revendication 2, **caractérisée en ce que** chacun desdits quatre flancs (51, 52, 53, 54) comprend :
- un panneau latéral (50) ;
- une paroi de séparation (500) anti-surmontage qui empêche deux caisses flanquées de se surmonter ; ladite paroi de séparation (500) se prolongeant à partir dudit panneau (50) et dépassant vers l'intérieur de la zone d'empilage (55) ; ladite paroi de séparation (500) étant interposée entre le premier et le second bras (41, 42) des moyens de blocage (4) réciproque dans ladite position de fonctionnement des moyens de blocage (4) réciproque.

6. Machine selon la revendication 4 ou 5, lorsqu'elle dépend directement ou indirectement de la revendication 2, **caractérisée en ce que** lesdits quatre flancs (51, 52, 53, 54) comprennent :
- un premier et un troisième flanc (51, 53), réciproquement opposés ;
- un deuxième et un quatrième flanc (52, 54), réciproquement opposés ;
les moyens de blocage (4) réciproque étant positionnés au moins le long des premier et troisième flancs (51, 53) ;
les moyens de traction (3) étant positionnés le long des deuxième et quatrième flancs (52, 54) .

7. Machine selon l'une quelconque des revendications de 4 à 6, **caractérisée en ce qu'**elle comprend un unique moteur électrique (57) servant à activer les quatre flancs (51, 52, 53, 54) pouvant être rapprochés.

8. Procédé d'empilage de caisses contenant des produits, comprenant les étapes suivantes :
- définir une première couche (91) avec un premier ensemble de caisses (9) ;
- positionner les moyens de butée latérale (8) de la première couche (91) de telle sorte qu'ils s'autocentrent et maintiennent la première couche (91) dans une zone d'empilage (55) ;
- empiler un second ensemble de caisses (9) sur le premier ensemble de caisses (9) de manière à former une seconde couche (92) ;
**caractérisé par** la compensation de toute déformation par écrasement latéral des caisses (9) du premier ensemble ; l'étape consistant à compenser toute déformation par écrasement latéral des caisses (9) du premier ensemble comprenant la sous-étape consistant à tirer au moins un côté d'une caisse du premier ensemble contre lesdits moyens de butée (8) ; l'étape consistant à compenser toute déformation ayant lieu avant l'étape d'empilage d'un deuxième ensemble de caisses sur le premier ensemble de caisses.

9. Procédé selon la revendication 8, **caractérisé en ce que** l'étape consistant à compenser toute déformation des caisses (9) du premier ensemble comprend des sous-étapes de :
- tirer deux côtés opposés du périmètre global défini dans une vue en plan par la première couche (91) de caisses (9) le long de directions opposées ;
- retenir réciproquement au moins une partie de deux côtés adjacents de deux caisses (9) flanquées du premier ensemble, en introduisant ladite partie dans un siège (40) défini par un premier et un second bras (41, 42) flanqués.

10. Procédé selon la revendication 8 ou 9, **caractérisé en ce que** l'étape consistant à positionner les moyens de butée latérale (8) de la première couche de manière à ce qu'ils retiennent la première couche (91) dans une zone d'empilage (55) comprend une sous-étape de rapprochement, tout en les maintenant à angle droit, de quatre flancs (51, 52, 53, 54) de manière à auto-centrer et à bloquer ledit premier ensemble de caisses (9) par rapport à ceux-ci.
